Europäisches Patentamt

European Patent Office

Office européen des brevets

(11) Publication number: **0 163 376**
**B1**

(12) **EUROPEAN PATENT SPECIFICATION**

(45) Date of publication of patent specification: **14.12.88**

(21) Application number: **85302013.9**

(22) Date of filing: **22.03.85**

(51) Int. Cl.⁴: **F 16 H 1/16, F 16 H 25/06, F 16 H 1/24, F 16 H 49/00**

(54) A ball retaining structure in a power transmission apparatus.

(30) Priority: **28.05.84 JP 78265/84**

(43) Date of publication of application:
**04.12.85 Bulletin 85/49**

(45) Publication of the grant of the patent:
**14.12.88 Bulletin 88/50**

(84) Designated Contracting States:
**BE CH DE FR GB IT LI SE**

(56) References cited:
**FR-A- 452 634**
**US-A-3 274 847**

**PATENT ABSTRACTS OF JAPAN, vol. 6, no. 172, 7th September 1982, page (M-154) (0150); & JP-A-57-83748(MATSUSHITA) 25-05-1982**

(73) Proprietor: **Nemoto Kikaku Kogyo Co., Ltd.**
**No. 1095-15, Yoshihashi**
**Yachiyo-shi Chiba-ken (JP)**

(72) Inventor: **Nemoto, Isao**
**6-11-24, Higashinarashino**
**Narashino-shi Chiba-ken (JP)**

(74) Representative: **Jukes, Herbert Lewis**
**Swann, Elt & Company 31 Beaumont Street**
**Oxford OX1 2NP (GB)**

EP 0 163 376 B1

Courier Press, Leamington Spa, England.

# Description

This invention relates to a ball retaining structure suitable in a transmission apparatus for transmitting a power by means of magnetic balls arranged between an input rotating body and an output rotating body, e.g. worm/worm wheel. The ball retaining structure is simple in construction, and prevents the balls from slipping off at least one said rotating body.

A power transmission apparatus has been commercially available, utilising a worm and a worm wheel as rotating bodies. The worm wheel has a disc shape, on the circumference of which at its tooth positions are arranged rotatably a plurality of balls for reducing friction loss during the engagement phase of the power transmission apparatus. In the engaged phase, the balls never slip off the worm wheel. But, in the disengaged phase, the balls readily slip off the worm wheel. A variety of ball retaining structures has been proposed to avoid said slipping off and to retain the balls rotatably. In one proposed structure, arranged balls are rotatably embedded more than half thereinto. That structure has the disadvantage of complicated and time consuming production. In another proposed structure, an outer annular ring covers a disc circumference with the balls except for the engaged phase, in order to prevent slipping off of the balls. That structure has the problems of very difficult arrangement and adjustment of the outer annular ring, at the minimum clearance or gap for preventing the balls from slipping off therethrough. Thus, the outer annular ring must be partially cut out to cover only the non-engaging area. Also, the partially cut out annular ring must be arranged as close as possible to the engaged area, which arrangement requires difficult adjustment.

A first aspect of the present invention provides a ball retaining structure suitable in a transmission apparatus for transmitting a power by means of magnetic balls (14) between an input rotating body (10) and an output rotating body (16), characterised by said input rotating body and/or said output rotating body is/are provided with at least one magnet means (22, 24) so as to enable rotatable retention of said balls.

A second aspect of the present invention provides a transmission apparatus, characterised by at least one ball retaining structure according to the first aspect of the present invention.

A third aspect of the present invention provides a method of transmitting power, characterised by utilising at least one transmission apparatus according to the second aspect of the present invention.

The present invention can be embodied in any suitable manner. For example, said input rotating body can be of non-magnetic material, and/or said output rotating body can be of non-magnetic material. In the present invention, preferably: said input rotating body is a worm; and said output rotating body is a worm wheel. Preferably, said at least one magnetic means is provided in that worm wheel. One example of said at least one magnet means is a single or integral magnet, e.g. an annular magnet; and preferably arranged coaxially in said worm wheel. Another example of said at least one magnetic means is a plurality of magnets; and preferably arranged in said worm wheel, e.g. at positions corresponding to said balls. Said balls are preferably iron balls.

In the accompanying drawings, which are given by way of example of the present invention, identical references have identical meanings, and:

Fig. 1 is a detailed broken plane view of one embodiment of a ball retaining structure; and

Fig. 2 is a detailed broken plane view of another embodiment of a ball retaining structure.

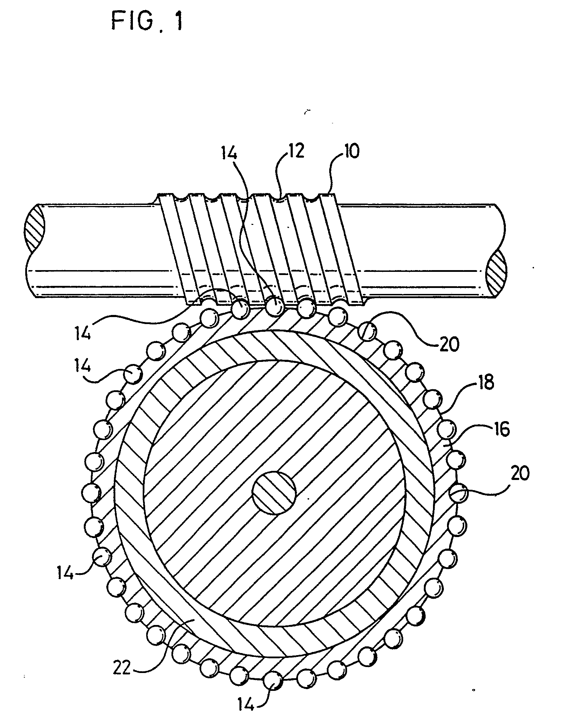

In Fig. 1, an input rotating body of non-magnetic material is a worm 10 of which each tooth groove 12 has a substantially half-circular cross section or a substantially half-cylindrical form, in order to mesh with corresponding magnetic balls 14, e.g. iron balls. An output rotating body of non-magnetic material is a worm wheel 16 whose circumference 18 has grooves 20 for meshing with balls 14. Grooves 20 are of substantially half-circular cross section or of substantially half-cylindrical form, and have the same pitch as tooth grooves 12, so that balls 14 mesh with grooves 20. Worm wheel 16 has a single (or integral) annular magnet 22 coaxially therein. Magnet 22 has a radius slightly less than a distance between the bottom faces of grooves 20 and the centre of worm wheel 16. Magnetic force from magnet 22 attracts balls 14 in meshing grooves 20, thereby preventing balls 14 from slipping out of grooves 20 but allowing balls 14 to be retained rotatably therein. The magnetically retained balls 14 enable a power to be transmitted with very little friction loss between worm 10 and worm wheel 16.

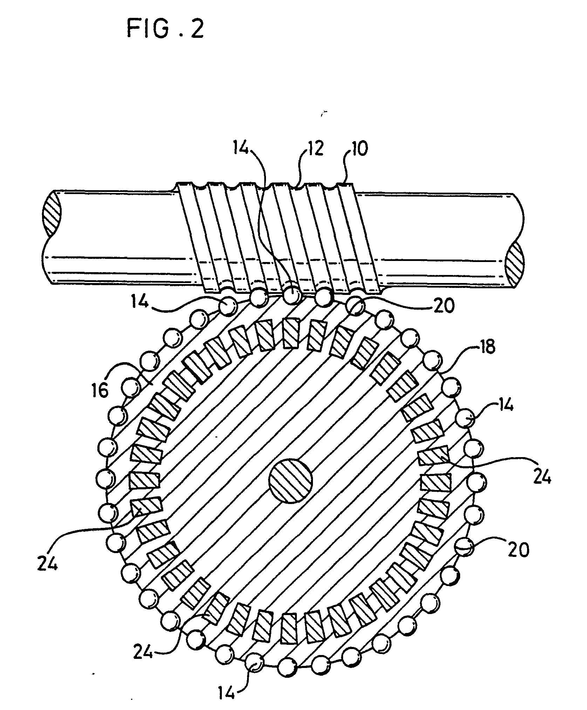

In Fig. 2, which is a modification of Fig. 1, the single annular magnet 22 has been replaced by a plurality of magnet blocks 24 embedded within worm wheel 16, at positions corresponding to meshing grooves 20 and radially inward slightly from the bottom faces of grooves 20.

In Figs. 1 and 2, each tooth groove 12 and each meshing groove 20 may have cross sections to allow two-point contact with a ball 14 in order to prevent displacement of the ball 14.

The ball retaining structure of Fig. 1 or Fig. 2 can be manufactured at very low cost compared with the complicated structures in the prior art.

The ball retaining structure of Fig. 1 or Fig. 2 can be modified or varied in accordance with the description given above before the first reference to the drawings. Thus, the present invention is not limited to worms 10 and worm wheels 16, but may be applied to e.g. any type of power transmission apparatus, provided that a power is transmitted through magnetic balls. Given the above disclosures of the present invention, it will be seen that an input rotating body and/or an output rotating body can be provided with at least one magnet means so as to enable retention of magnetic balls.

## Claims

1. A ball retaining structure suitable in a transmission apparatus for transmitting a power by means of magnetic balls (14) between an input rotating body (10) and an output rotating body (16), characterised by said input rotating body and/or said output rotating body is/are provided with at least one magnet means (22, 24) so as to enable rotatable retention of said balls.

2. A ball retaining structure as claimed in claim 1, characterised by said input rotating body is of non-magnetic material, and/or said output rotating body is of non-magnetic material.

3. A ball retaining structure as claimed in claim 1 or 2, characterised by said input rotating body is a worm (10); and said output rotating body is a worm wheel (16).

4. A ball retaining structure as claimed in claim 3, characterised by at least one said magnetic means (22, 24) is provided in said worm wheel (16).

5. A ball retaining structure as claimed in claim 4, characterised by said at least one magnetic means is a single annular magnet (22) in said worm wheel (16).

6. A ball retaining structure as claimed in claim 5, characterised by said single annular magnet (22) is arranged coaxially in said worm wheel (16).

7. A ball retaining structure as claimed in claim 4, characterised by said at least one magnetic means is a plurality of magnets (24) in positions corresponding to said magnetic balls (14).

8. A ball retaining structure as claimed in any one of claims 1 to 7, characterised by said magnetic balls comprise iron balls.

9. A transmission apparatus, characterised by at least one ball retaining structure as claimed in any one of claims 1 to 8.

10. A method of transmitting power, characterised by utilising at least one transmission apparatus as claimed in claim 9.

## Patentansprüche

1. Kugelhalteanordnung, die in einer Übertragungsvorrichtung für die Kraftübertragung mittels magnetischer Kugeln (14) zwischen einem Antriebsdrehkörper (10) und einem Abtriebsdrehkörper (16) geeignet ist, dadurch gekennzeichnet, daß der Antriebs- und/oder der Abtriebsdrehkörper mit mindestens einer magnetischen Vorrichtung (22, 24) versehen ist/sind, so daß ein drehbewegliches Halten der Kugeln ermöglicht wird.

2. Kugelhalteanordnung nach Anspruch 1, dadurch gekennzeichnet, daß der Antriebsdrehkörper aus nichtmagnetischem Material und/oder der Abtriebsdrehkörper aus nichtmagnetischem Material ist.

3. Kugelhalteanordnung nach Anspruch 1 oder 2, dadurch gekennzeichnet, daß der Antriebsdrehkörper eine Schnecke (10) und der Abtriebsdrehkörper ein Schneckenrad (16) ist.

4. Kugelhalteanordnung nach Anspruch 3, dadurch gekennzeichnet, daß mindestens eine magnetische Vorrichtung (22, 24) in dem Schneckenrad (16) vorgesehen ist.

5. Kugelhalteanordnung nach Anspruch 4, dadurch gekennzeichnet, daß die mindestens eine magnetische Vorrichtung ein einziger ringförmiger Magnet (22) in dem Schneckenrad (16) ist.

6. Kugelhalteanordnung nach Anspruch 5, dadurch gekennzeichnet, daß der einzige ringförmige Magnet (22) koaxial in dem Schneckenrad (16) angeordnet ist.

7. Kugelhalteanordnung nach Anspruch 4, dadurch gekennzeichnet, daß die mindestens eine magnetische Vorrichtung eine Vielzahl von Magneten (24) an den den magnetischen Kugeln (14) entsprechenden Positionen ist.

8. Kugelhalteanordnung nach einem der Ansprüche 1 bis 7, dadurch gekennzeichnet, daß die magnetischen Kugeln Eisenkugeln aufweisen.

9. Übertragungsvorrichtung, gekennzeichnet durch mindestens eine Kugelhalteanordnung, wie sie in einem der Ansprüche 1 bis 8 beansprucht ist.

10. Verfahren zur Kraftübertragung, gekennzeichnet durch die verwendung mindestens einer Übertragungsvorrichtung, wie sie in Anspruch 9 beansprucht ist.

## Revendications

1. Structure de retenue de billes convenant pour être utilisée dans un dispositif de transmission servant à transmettre une énergie au moyen de billes magnétiques (14) entre un corps rotatif d'entrée (10) et un corps rotatif de sortie (16), caractérisée en ce que ledit corps rotatif d'entrée et/ou ledit corps rotatif de sortie est/sont équipés d'au moins un moyen magnétique (22, 24) permettant de retenir, avec possibilité de rotation, lesdites billes.

2. Structure de retenue de billes selon la revendication 1, caractérisée en ce que ledit corps rotatif d'entrée est réalisé en un matériau amagnétique et/ou que ledit corps rotatif de sortie est réalisé en un matériau amagnétique.

3. Structure de retenue de billes selon la revendication 1 ou 2, caractérisée en ce que ledit corps rotatif d'entrée est une vis sans fin (10); et que ledit corps rotatif de sortie est une roue à vis sans fin (16).

4. Structure de retenue de billes selon la revendication 3, caractérisée en ce que ledit moyen magnétique (22, 24) prévu en au moins un exemplaire est disposé dans ladite roue à vis sans fin (16).

5. Structure de retenue de billes selon la revendication 4, caractérisée en ce que ledit moyen magnétique prévu en au moins un exemplaire est un aimant annulaire unique (22) disposé dans ladite roue à vis sans fin (16).

6. Structure de retenue de billes selon la revendication 5, caractérisée en ce que ledit aimant annulaire unique (22) est disposé coaxialement dans ladite roue à vis sans fin (16).

7. Structure de retenue de billes selon la revendication 4, caractérisée en ce que ledit moyen magnétique prévu en au moins un exemplaire comprend une pluralité d'aimants (24) situés dans des positions correspondant auxdites billes magnétiques (14).

8. Structure de retenue de billes selon l'une quelconque des revendications 1 à 7, caractérisée en ce que lesdites billes magnétiques sont constituées par des billes de fer.

9. Dispositif de transmission, caractérisé par au moins une structure de retenue de billes telle que revendiquée dans l'une quelconque des revendications 1 à 8.

10. Procédé de transmission d'une énergie, caractérisé par l'utilisation d'au moins un dispositif de transmission tel que revendiqué dans la revendication 9.

FIG. 1

FIG . 2